# EUROPEAN PATENT APPLICATION

(11) **EP 2 146 219 A1**
(43) Date of publication of application: **20.01.2010**
(21) Application number: 09165285.9
(22) Date of filing: 13.07.2009
(51) Int. Cl.: G01S 5/02, G01S 5/14

(54) **Positioning method, positioning apparatus, and recording medium**

(30) Priority: 15.07.2008 TW 97126799
(71) Applicant: HTC Corporation, Taoyuan County 330 (TW)
(72) Inventor: Lee, Yu-Cheng, 330, Taoyuan City (TW)
(74) Representative: 2K Patentanwälte Blasberg Kewitz & Reichel

(57) **Abstract**

A positioning method, a positioning apparatus (410), and a recording medium are provided. First, m cell towers (420, 430, 440) and n hotspots (450, 460, 470) around an electronic communication device are detected, and an identification code and a signal strength value of each cell tower and hotspot are obtained, wherein m and n are integers greater than or equal to 1, and m+n is an integer greater than or equal to 3. Next, positioning information corresponding to the cell towers and the hotspots is queried according to the identification codes of the cell towers and the hotspots. Finally, positioning information of the electronic communication device is obtained according to the positioning information and the signal strength values of the cell towers and the hotspots.

## Description

### BACKGROUND

Most existing positioning apparatuses (or navigation apparatuses) adopt the Global Position System (GPS) technique. The GPS technique combines satellite technology and wireless communication techniques to provide users with precise positioning, speed, and time information.

The positioning and navigation of the GPS rely on the cooperation between satellites, positioning apparatuses, and navigation software. However, a positioning apparatus may be unable to receive any satellite signal or unable to receive satellite signal well due to the blockage of buildings. For example, a positioning apparatus may be unable to receive satellite signal well interiorly or in an airport, a building, an underground pass, or a tunnel, and accordingly cannot execute the positioning operation correctly.

Thus, whenever a user wants to use a positioning apparatus, he/she has to move to a place where the positioning apparatus can receive satellite signals (for example, outside of a building) to allow the positioning apparatus to execute the positioning operation, which is very inconvenient to the user.

To resolve this problem, a technique for positioning an object by using signals from wireless communication cell towers has been developed in recent years. According to this technique, the signal strengths of a plurality of cell towers around a cell phone are detected, and an approximate distance between the cell phone and each of the cell towers is calculated according to the signal strength of the cell tower. Meanwhile, the actual positions of the cell towers are determined according to the identification codes of the cell towers so that the positioning information of the cell phone can be calculated accordingly. Since the signals from the cell towers can pass through any building, the building blockage problem is eliminated. However, since two cell towers may be deployed several kilometers away, the positioning information obtained through this technique is not very precise. Besides, the blockage of buildings may cause the signals to attenuate. As a result, this technique cannot provide precise positioning information. On the other hand, along with the widespread of the wireless fidelity (Wi-Fi) technique, wireless routers are broadly deployed by consumers or enterprises, especially in urban areas. Accordingly, a Wi-Fi positioning system (WPS) locates all the nearby hotspots according to the radio signals emitted by wireless routers and selects the position of a hotspot having the strongest signal as the positioning information of a Wi-Fi device. However, this positioning technique is only applicable to urban areas with densely distributed Wi-Fi hotspots.

### SUMMARY OF THE APPLICATION

Based on the above, how to obtain the positioning information of a device according to the signal strengths and the position information of different types of signal sources has become one of the major subjects in the present art.

Accordingly, the present application is directed to a positioning method, wherein the position of an electronic communication device is calculated according to the positions and signal strength values of surrounding signal sources.

The present application is directed to a positioning apparatus, wherein the positioning information of an electronic communication device is calculated according to the signal strength values of surrounding signal sources detected by different types of communication devices.

The present application is directed to a recording medium suitable for storing programs to be loaded into an electronic communication device and executed by the same to calculate the positioning information of the electronic communication device.

The present application provides a positioning method. First, m cell towers around an electronic communication device are detected, and an identification code and a signal strength value of each of the cell towers are obtained. Meanwhile, n hotspots around the electronic communication device are detected, and an identification code and a signal strength value of each of the hotspots are obtained, wherein m and n are positive integers greater than or equal to 1, and m+n is a positive integer greater than or equal to 3. Next, positioning information of the cell towers and the hotspots is queried according to the identification codes of the cell towers and the hotspots. Finally, a positioning information of the electronic communication device is calculated according to the positioning information and the signal strength values of the cell towers and the hotspots.

According to an example of the present application, wherein the identification code of the hot spot is a media access control (MAC) address.

According to an example of the present application, wherein the positioning information of the electronic communication device is calculated through a triangulation method according to the positioning information and the signal strength values of the cell towers and the hotspots.

According to an example of the present application, in the positioning method, a satellite positioning system of the electronic communication device is further used to assist in obtaining a precise position of the electronic communication device according to the calculated positioning information.

According to an example of the present application, the step of querying the positioning information of the cell towers and the hotspots according to the identification codes of the cell towers and the identification codes of the hotspots comprises querying the positioning information corresponding to the identification codes of the cell towers and the MAC addresses of the hotspots from a positioning information mapping table stored in the electronic communication device.

According to an example of the present application, in the step of querying the positioning information of the cell towers and the hotspots according to the identification codes of the cell towers and the identification codes of the hotspots, the identification codes of the cell towers and the MAC addresses of the hotspots are transmitted to a server. The server queries the positioning information corresponding to the identification codes and the MAC addresses from the positioning information mapping table. Then, the electronic communication device receives the positioning information from the server and uses the received positioning information to calculate the positioning information of the electronic communication device.

According to an example of the present application, in the step of calculating the positioning information of the electronic communication device according to the positioning information and the signal strength values of the cell towers and the hotspots, the signal strength values of the cell towers and the hotspots are compared and three of the cell towers and the hotspots having the highest signal strength values are selected to calculate the positioning information of the electronic communication device.

According to an example of the present application, the cell towers comprise supporting the Global System for Mobile Communication (GSM), the Personal Handy-phone System (PHS), or the Code Division Multiple Access (CDMA) system.

According to an example of the present application, the hotspots comprise wireless fidelity (Wi-Fi) hotspots, radio repeaters, or radio broadcasters.

According to an example of the present application, the signal strength values comprise received signal strength indication (RSSI) values.

In another aspect, the present application provides a positioning apparatus comprising a first type communication module, a second type communication module, a query module, and a calculation unit. The first type communication module detects m cell towers around an electronic communication device and obtains an identification code and a signal strength value of each of the cell towers. The second type communication module detects n hotspots around the electronic communication device and obtains an identification code and a signal strength value of each of the hotspots, wherein m and n are positive integers greater than or equal to 1, and m+n is a positive integer greater than or equal to 3. The query module queries positioning information of the cell towers and the hotspots according to the identification codes of the cell towers detected by the first type communication module and the identification codes of the hotspots detected by the second type communication module. The calculation unit calculates positioning information of the electronic communication device according to the positioning information and the signal strength values of the cell towers and the hotspots.

According to an example of the present application, the identification code of the hot spot is a media access control (MAC) address.

According to an example of the present application, the calculation unit calculates positioning information of the electronic communication device according to the positioning information and the signal strength values of the cell towers and the hotspots through a triangulation method.

According to an example of the present application, the positioning apparatus further comprises a satellite positioning system which obtains a precise position of the electronic communication device according to the calculated positioning information.

According to an example of the present application, the positioning apparatus further comprises a storage unit for storing a positioning information mapping table which is provided for the query module to query the positioning information corresponding to the identification codes of the cell towers and the MAC addresses of the hotspots.

According to an example of the present application, the calculation unit compares the signal strength values of the cell towers and the hotspots and selects three of the cell towers and the hotspots having the highest signal strength values, so as to calculate the positioning information of the electronic communication device.

According to an example of the present application, the first type communication module comprises supporting the GSM system, the PHS, or the CDMA system.

According to an example of the present application, the second type communication module comprises a Wi-Fi device, a radio repeater, or a radio broadcaster.

The present application provides a recording medium, which records a computer program to be loaded into an electronic device for executing the positioning method described above. The computer program is consisted of a plurality of program code segments, such as program code segments of creating organization chart, signing forms, configuration, and deployment. Then, when the program code segments are loaded into the electronic communication device and executed, the steps of the positioning method and functions of the positioning system are executed.

In the present application, at least two types of communications modules are disposed in an electronic communication device, and the identification codes and signal strength values of cell towers and the MAC addresses and signal strength values of hotspots around the electronic communication device are detected and used for calculating the position of the electronic communication device through a triangulation method. In addition, the positioning information obtained through the positioning method in the present application may be provided to a satellite positioning system, so as to increase the positioning speed of the satellite positioning system.

### BRIEF DESCRIPTION OF THE DRAWINGS

The accompanying drawings are comprised to provide a further understanding of the application, and are incorporated in and constitute a part of this specification. The drawings illustrate examples of the application and, together with the description, serve to explain the principles of the application.

FIG. 1 is a block diagram of a positioning apparatus according to an example of the present application.

FIG. 2 is a flowchart of a positioning method according to an example of the present application.

FIG. 3 illustrates a positioning information mapping table according to an example of the present application.

FIG. 4 is a diagram of a positioning method according to an example of the present application.

FIG. 5 is a flowchart of a positioning method according to an example of the present application.

### DESCRIPTION

The present application detects the signal strength values of different signal sources around an electronic communication device and obtains the positioning information of the signal sources, so as to calculate the position of the electronic communication device. In the present application, the position of the electronic communication device is not determined according to a particular type of signal sources. Instead, along with the variation in the strengths of the received signals, the position of the electronic communication device is determined according to the signal sources having the highest signal strength values. Thus, the situation that the position of the electronic communication device cannot be determined due to changes in the signal receiving environment (for example, a user enters a building or goes to a suburb area) can be avoided. The present application provides a positioning method, a positioning apparatus, and a recording medium based on foregoing concept. Examples of the present application will be described below with reference to accompanying drawings.

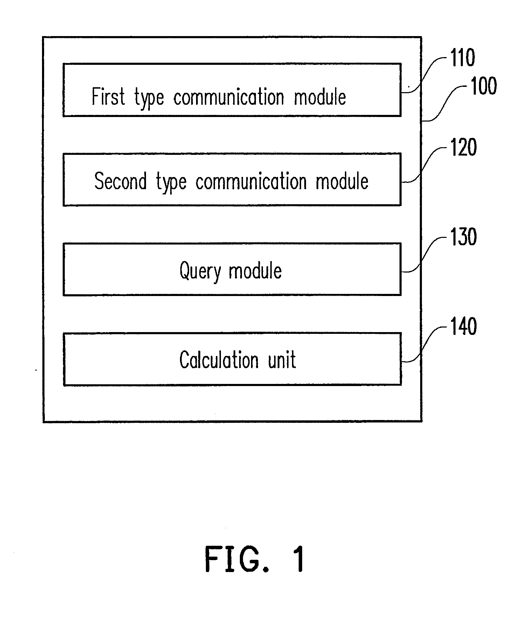

FIG. 1 is a block diagram of a positioning apparatus according to an example of the present application. Referring to FIG. 1, the positioning apparatus 100 in the present example comprises a first type communication module 110, a second type communication module 120, a query module 130, and a calculation unit 140. The positioning apparatus 100 is disposed in an electronic communication device for detecting the position of the electronic communication device. The electronic communication device may be a handheld electronic communication device, such as a car computer, a cell phone, a smartphone, a personal digital assistant (PDA), a PDA phone, a navigation device, a car PC, a music player, or a laptop, which is not limited by the present application. The functions of various elements in the positioning apparatus 100 will be described in detail below.

The first type communication module 110 may be a device supporting the Global System for Mobile Communication (GSM) system, the Personal Handy-phone System (PHS), or the Code Division Multiple Access (CDMA) system. The first type communication module 110 detects signals from m cell towers around the electronic communication device and obtains an identification code and a signal strength value of each of the cell towers. To be specific, the cell towers also transmit their own identification codes besides communication signals. The positioning apparatus 100 can obtain the positioning information of the cell towers according to the identification codes thereof.

The second type communication module 120 may be a device supporting wireless fidelity (Wi-Fi). The second type communication module 120 detects n hotspots around the electronic communication device and obtains an identification code, for example a media access control (MAC) address, and a signal strength value of each of the hotspots, wherein m and n are positive integers greater than or equal to 1, and m+n is a positive integer greater than or equal to 3. To be specific, each Wi-Fi hotspot has an independent MAC address. Similarly, the positioning apparatus 100 can obtain the positioning information of the hotspots according to the MAC addresses thereof.

The query module 130 collects the identification codes of the cell towers detected by the first type communication module 110 and the MAC addresses of the hotspots detected by the second type communication module 120 and queries the positioning information corresponding to the identification codes and the MAC addresses from a positioning information mapping table. The positioning information mapping table may be stored in a storage unit of the electronic communication device or in an external server, which is not limited by the present application. The query module 130 may query the positioning information corresponding to the identification codes and the MAC addresses directly from the storage unit or through a server.

The calculation unit 140 calculates the positioning information of the electronic communication device according to the positioning information of the cell towers and the hotspots obtained by the query module 130 and the signal strength values of the cell towers and the hotspots detected by the first type communication module 110 and the second type communication module 120 respectively.

To be specific, the types, number, and signal strengths of the signal sources detected by the positioning apparatus 100 may vary along with the change in the position of the electronic communication device. Accordingly, in the present application, the calculation unit 140 compares the signal strength values of the cell towers and the hotspots and selects three of the cell towers and the hotspots having the highest signal strength values to calculate the positioning information of the electronic communication device.

For example, stronger signals may be detected from the cell towers at a clear outdoor place. In this case, the signals from the cell towers are used for calculating the positioning information of the electronic communication device. However, very weak signals are received from the cell towers inside a building due to the blockage of the building. In this case, if there are hotspots deployed around, signals from the hotspots are stronger than signals from the cell towers, and accordingly, the signals from the hotspots are used for calculating the positioning information of the electronic communication device.

It should be mentioned that in the positioning method provided by the present application, the signal sources used for determining the position of an electronic communication device are not limited to a particular type of signal sources. Instead, different types, for example different two or three types, of signal sources having good signal strengths can be selectively used according to the actual situation. For example, two cell towers and one hotspot or two hotspots and one cell tower may be selected for determining the position of the electronic communication device.

In addition, if the electronic communication device is disposed with a satellite positioning system, the positioning information obtained by the positioning apparatus can be further used for assisting the satellite positioning system, so as to increase the positioning speed of the satellite positioning system. The function of the satellite positioning system is similar to that of an assisted GPS (AGPS), wherein, for example, an approximate position of the electronic communication device is first determined through the cell towers and/or hotspots, and after that, the precise position of the electronic communication device is determined through GPS satellites.

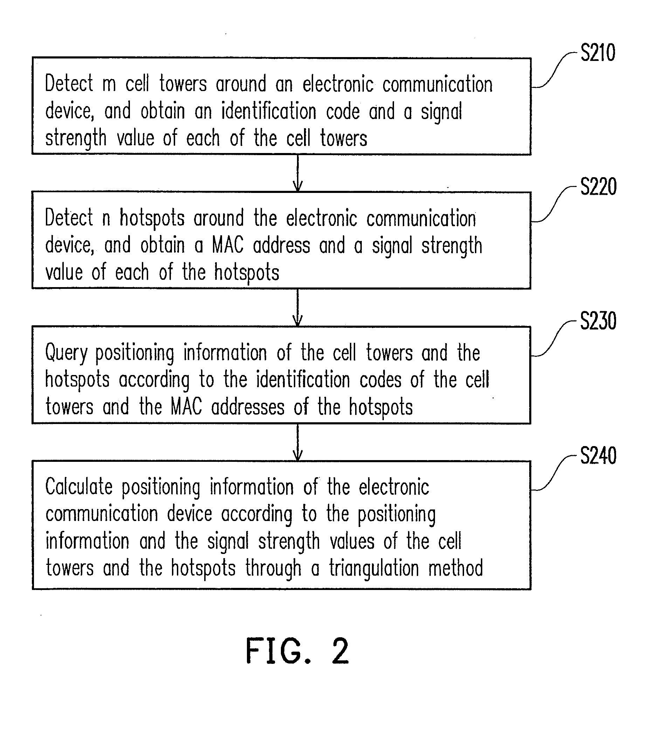

The present application also provides a positioning method corresponding to the positioning apparatus described above. The positioning method will be described herein with reference to an example of the present application. FIG. 2 is a flowchart of the positioning method according to an example of the present application. Referring to FIG. 2, the positioning method in the present example is suitable for obtaining the position of an electronic communication device (for example, a cell phone, a smartphone, a PDA, a PDA phone, a navigation device, a car PC, a music player, or a laptop, etc.) in different signal receiving environments, and below, the steps of the positioning method will be respectively described.

First, m cell towers around the electronic communication device are detected, and an identification code and a signal strength value of each of the cell towers are obtained (step S210). The cell towers may support, for example, the Global System for Mobile Communication (GSM), the Personal Handy-phone System (PHS), or the Code Division Multiple Access (CDMA) system. However, the present application is not limited thereto.

Next, n hotspots around the electronic communication device are detected, and an identification code, for example a MAC address, and a signal strength value of each of the hotspots are obtained (step S220), wherein m and n are positive integers greater than or equal to 1, and m+n is a positive integer greater than or equal to 3. The hotspots may be, for example, Wi-Fi hotspots, radio repeaters, or radio broadcasters, and the signal strength values are, for example, received signal strength indication (RSSI) values.

The positioning information of the cell towers and the hotspots are obtained according to the identification codes of the cell towers and the MAC addresses of the hotspots (step S230). The electronic communication device stores a positioning information mapping table, which records the positioning information corresponding to the identification codes of the cell towers and the MAC addresses of the hotspots.

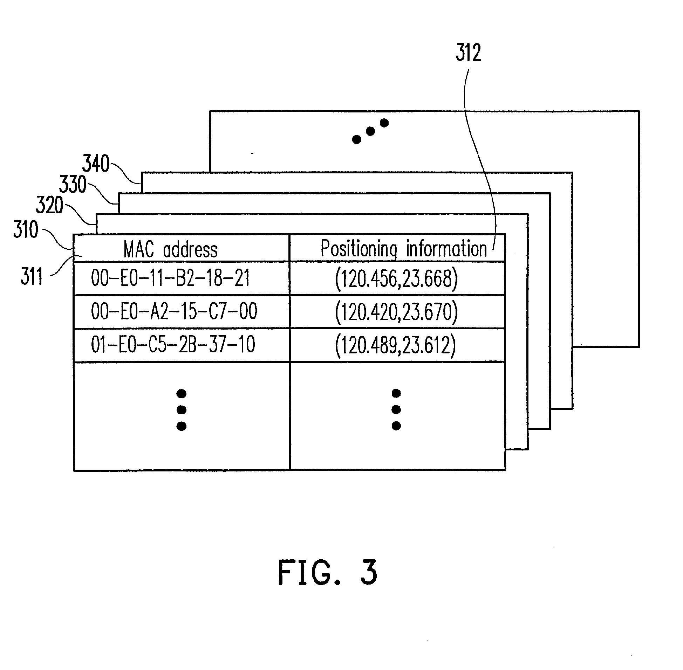

FIG. 3 illustrates a positioning information mapping table according to an example of the present application. Referring to FIG. 3, the positioning information mapping table 310 is used for recording the positioning information of Wi-Fi hotspots. The positioning information mapping table 310 has a MAC address column 311 and a positioning information column 312, and each row in the positioning information mapping table 310 represents one Wi-Fi hotspot. It should be mentioned that the electronic communication device may store different positioning information mapping tables respectively corresponding to different types of signal sources. For example, a positioning information mapping table 320 corresponding to the cell towers, a positioning information mapping table 330 corresponding to radio repeaters or radio broadcasters, and a positioning information mapping table 340 corresponding to AGPS, etc. However, the positioning information of different types of signal sources may also be stored into one positioning information mapping table.

After obtaining the positioning information of the cell towers and the hotspots, the electronic communication device obtains positioning information thereof according to the positioning information and the signal strength values of the cell towers and the hotspots, for example through a triangulation method (step S240). In an example, the electronic communication device compares the signal strength values of the cell towers and the hotspots and selects three of the cell towers and the hotspots having the highest signal strength values to calculate the positioning information thereof.

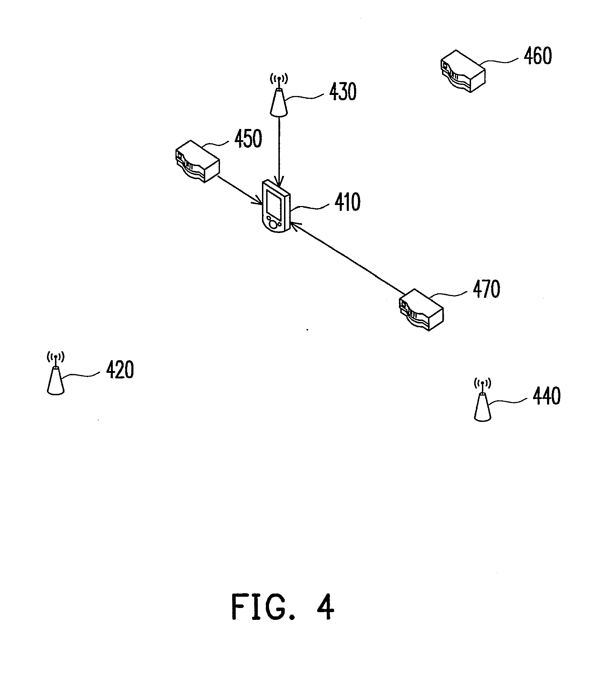

FIG. 4 is a diagram of a positioning method according to an example of the present application. Referring to FIG. 4, in the present example, the signal strength values of surrounding cell towers and hotspots are detected by using the positioning apparatus described in foregoing example, and the position of the positioning apparatus is calculated accordingly. The positioning apparatus may be disposed in an electronic communication device (for example, a cell phone, a PDA, a PDA phone, a navigation device, a car PC, a music player, or a laptop, etc). However, the disposition of the positioning apparatus is not limited in the present application.

As shown in FIG. 4, the positioning apparatus 410 is located within the signal ranges of the cell towers 420, 430, and 440 and the hotspots 450, 460, and 470. Thus, the positioning apparatus 410 can detect the signal strength values of these signal sources through a GSM and Wi-Fi modules thereof. After comparing these signal strength values, the positioning apparatus 410 selects three signal sources having the highest signal strength values (for example, the cell tower 430 and the hotspots 450 and 470) to calculate the positioning information of the positioning apparatus 410 through the triangulation method.

It should be noted that an approximate position of the electronic communication device can be obtained through the positioning method in the present application. Furthermore, if the electronic communication device is disposed with a satellite positioning system, this approximate position may be provided to the satellite positioning system to increase the positioning speed of the satellite positioning system and obtain a precise position of the electronic communication device.

Through the positioning method described above, a user can obtain the positioning information thereof anytime and anywhere by using the electronic communication device. By determining the position of an electronic communication device by using different types of signal sources according to different signal receiving environments, not only the problem of inaccurate positioning in the conventional technique is resolved, but the positioning speed of the electronic communication device is increased.

It should be mentioned that in another example of the present application, the positioning information mapping table is stored in a server (for example, a server of a communication service provider) instead of stored in the electronic communication device, so that the positioning information of more cell towers and hotspots located at different regions may be stored, and users in these regions can obtain their positioning information instantly, or the positioning information mapping table may be downloaded by an electronic communication device to update the positioning information mapping table stored therein. Below, this will be described in detail with reference to another example of the present application.

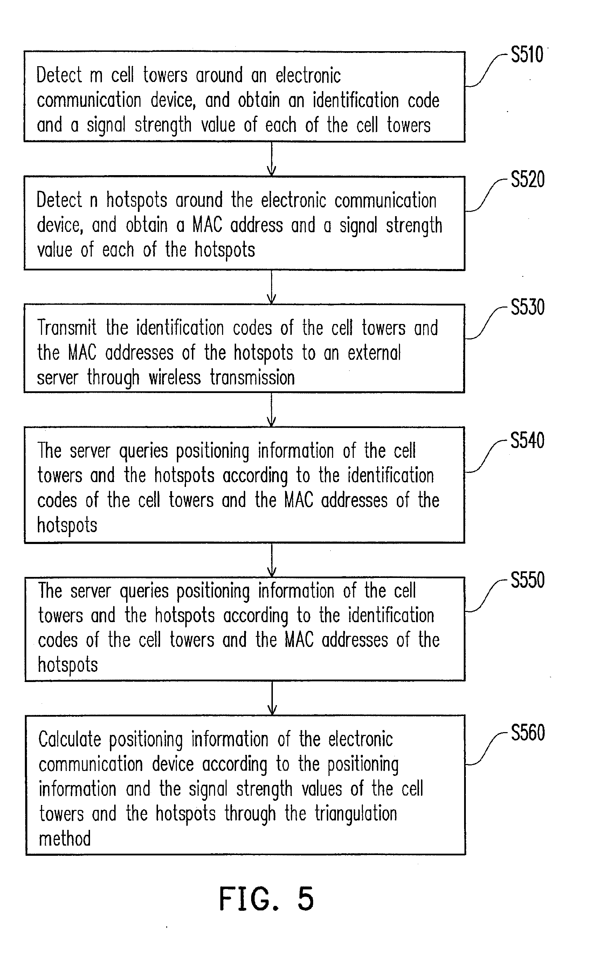

FIG. 5 is a flowchart of a positioning method according to an example of the present application. Referring to FIG. 5, the positioning method in the present example is suitable for calculating the position of an electronic communication device (for example, a cell phone, a PDA, a PDA phone, a navigation device, a car PC, a music player, or a laptop, etc.) in different signal receiving environments. Below, the steps of the positioning method will be respectively described in detail.

First, m cell towers around the electronic communication device are detected, and an identification code and a signal strength value of each of the cell towers are obtained (step S510). The cell towers may support, for example, the GSM system, the PHS, or the CDMA system, which is not limited by the present application.

Next, n hotspots around the electronic communication device are detected, and an identification code, for example a MAC address, and a signal strength value of each of the hotspots are obtained (step S520), wherein m and n are positive integers greater than or equal to 1, and m+n is a positive integer greater than or equal to 3. The hotspots may be, for example, Wi-Fi hotspots, radio repeaters, or radio broadcasters, and the signal strength values are, for example, RSSI values.

After obtaining the identification codes of the cell towers and the MAC addresses of the hotspots, the electronic communication device further transmits foregoing information to an external server through wireless transmission (step S530). Herein the wireless transmission may be achieved through the communication connection (for example, telecommunication communication connection or data communication connection). However, the present application is not limited thereto, and the wireless transmission may also be achieved through other methods.

After receiving foregoing information, the server queries a positioning information mapping table stored therein to obtain the positioning information corresponding to the identification codes and the MAC addresses (step S540). After that, the server transmits the positioning information back to the electronic communication device (step S550). The electronic communication device then calculates the positioning information thereof according to the positioning information and the signal strength values of the cell towers and the hotspots through a triangulation method (step S560).

It should be mentioned that in another example of the present application, the step of calculating the positioning information of the electronic communication device through the triangulation method may also be carried out in the server, and the positioning information is transmitted back to the electronic communication device by the server, so that the calculation load of the electronic communication device can be reduced.

The present application further provides a recording medium, which records a computer program to be loaded into an electronic device to execute the positioning method described above. The computer program is composed of a plurality of program instructions (for example, an organization chart establishing program instruction, a table approving program instruction, a setting program instruction, and a deployment program instruction, etc). These program instructions can be loaded into an electronic communication device and executed by the same to accomplish the steps in foregoing positioning method.

As described above, the present application provides a positioning method, a positioning apparatus, and a recording medium, wherein signals emitted by different types of signal sources are detected and signal strengths and positioning information of these signal sources are obtained by different types of communication devices disposed in an electronic communication device. After that, the most appropriate signal sources are determined according to foregoing information and used to calculate the positioning information of the electronic communication device. Thereby, the positioning method and the positioning apparatus of the present application can provide precise positioning information in different signal receiving environments.

It will be apparent to those skilled in the art that various modifications and variations can be made to the structure of the present application without departing from the scope or spirit of the application. In view of the foregoing, it is intended that the present application cover modifications and variations of this application provided they fall within the scope of the following claims and their equivalents.

## Claims

1. A positioning method, suitable for an electronic communication device, the positioning method comprising:
detecting m cell towers around the electronic communication device, and obtaining an identification code and a signal strength value of each of the cell towers;
detecting n hotspots around the electronic communication device, and obtaining an identification code and a signal strength value of each of the hotspots,
wherein m and n are positive integers greater than or equal to 1, and m+n is a positive integer greater than or equal to 3;
querying positioning information of the cell towers and the hotspots according to the identification codes of the cell towers and the identification codes of the hotspots; and
obtaining the positioning information of the electronic communication device according to the positioning information and the signal strength values of the cell towers and the hotspots.

2. The positioning method according to claim 1, wherein the identification code of each of the hotspots is a media access control (MAC) address.

3. The positioning method according to claim 2, wherein the step of obtaining the positioning information of the electronic communication device according to the positioning information and the signal strength values of the cell towers and the hotspots is through a triangulation method.

4. The positioning method according to claim 3, wherein the step of calculating the positioning information of the electronic communication device according to the positioning information and the signal strength values of the cell towers and the hotspots through the triangulation method comprises:
comparing the signal strength values of the cell towers and the hotspots, and selecting three of the cell towers and the hotspots having the highest signal strength values to calculate the positioning information of the electronic communication device.

5. The positioning method according to claim 2, wherein the step of querying the positioning information of the cell towers and the hotspots according to the identification codes of the cell towers and the identification codes of the hotspots comprises:
querying the positioning information corresponding to the identification codes of the cell towers and the MAC addresses of the hotspots from a positioning information mapping table stored in the electronic communication device.

6. The positioning method according to claim 2, wherein the step of querying the positioning information of the cell towers and the hotspots according to the identification codes of the cell towers and the identification codes of the hotspots comprises:
transmitting the identification codes of the cell towers and the MAC addresses of the hotspots to a server;
querying the positioning information corresponding to the identification codes and the MAC addresses from a positioning information mapping table by the server; and
receiving the positioning information from the server and using the received positioning information to calculate the positioning information of the electronic communication device.

7. The positioning method according to one of claims 1 to 6, further comprising:
assisting a satellite positioning system of the electronic communication device in obtaining a precise position of the electronic communication device according to the obtained positioning information.

8. A recording medium, executing the positioning method according to claim 1 via an electronic device.

9. A positioning apparatus, comprising:
a first type communication module, for detecting m cell towers around an electronic communication device and obtaining an identification code and a signal strength value of each of the cell towers;
a second type communication module, for detecting n hotspots around the electronic communication device and obtaining an identification code and a signal strength value of each of the hotspots, wherein m and n are positive integers greater than or equal to 1, and m+n is a positive integer greater than or equal to 3;
a query module, for querying positioning information of the cell towers and the hotspots according to the identification codes of the cell towers detected by the first type communication module and the identification code of the hotspots detected by the second type communication module; and
a calculation unit, for calculating the positioning information of the electronic communication device according to the positioning information and the signal strength values of the cell towers and the hotspots.

10. The positioning apparatus according to claim 9, wherein the identification code of each of the hotspots is a media access control (MAC) address.

11. The positioning apparatus according to claim 10, wherein the calculation unit calculates the positioning information of the electronic communication device according to the positioning information and the signal strength values of the cell towers and the hotspots through a triangulation method; and the calculation unit compares the signal strength values of the cell towers and the hotspots and selects at least three of the cell towers and the hotspots having the highest signal strength values to calculate the positioning information of the electronic communication device through the triangulation method.

12. The positioning apparatus according to claim 10 further comprising:
a storage unit, for storing a positioning information mapping table which is provided for the query module to query the positioning information corresponding to the identification codes of the cell towers and the MAC addresses of the hotspots.

13. The positioning apparatus according to claim 9 further comprising:
a satellite positioning system, for obtaining a precise position of the electronic communication device according to the calculated positioning information.

14. The positioning apparatus according to claim 9, wherein the first type communication module comprises supporting a GSM system, a PHS, or a CDMA system;
the second type communication module comprises a Wi-Fi device, a radio repeater, or a radio broadcaster; and
the signal strength values comprise RSSI values.

15. A positioning apparatus, comprising:
a cell tower detecting means for detecting m cell towers around the electronic communication device, and obtaining an identification code and a signal strength value of each of the cell towers;
a hotspot detecting means for detecting n hotspots around the electronic communication device, and obtaining an identification code and a signal strength value of each of the hotspots,
wherein m and n are positive integers greater than or equal to 1, and m+n is a positive integer greater than or equal to 3;
a querying means for querying positioning information of the cell towers and the hotspots according to the identification codes of the cell towers and the identification codes of the hotspots; and
a positioning means for obtaining the positioning information of the electronic communication device according to the positioning information and the signal strength values of the cell towers and the hotspots.
